(19) Europäisches Patentamt
European Patent Office
Office européen des brevets

(11) EP 4 392 479 B1

(12) EUROPEAN PATENT SPECIFICATION

(45) Date of publication and mention of the grant of the patent:
**25.12.2024 Bulletin 2024/52**

(21) Application number: **23783708.3**

(22) Date of filing: **13.10.2023**

(51) International Patent Classification (IPC):
***C08G 77/04*** *(2006.01)* ***C08G 77/18*** *(2006.01)*
***C08G 77/28*** *(2006.01)* ***C08G 77/46*** *(2006.01)*

(52) Cooperative Patent Classification (CPC):
**C08G 77/045; C08G 77/18; C08G 77/28; C08G 77/46**

(86) International application number:
**PCT/EP2023/078473**

(87) International publication number:
**WO 2024/088789 (02.05.2024 Gazette 2024/18)**

# (54) OLIGOMERIC ORGANOSILANES, PREPARATION THEREOF AND USE THEREOF IN RUBBER MIXTURES

OLIGOMERE ORGANOSILANE, IHRE HERSTELLUNG UND VERWENDUNG IN KAUTSCHUKMISCHUNGEN

ORGANOSILANES OLIGOMÈRES, LEUR PRÉPARATION ET LEUR UTILISATION DANS DES MÉLANGES DE CAOUTCHOUC

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.10.2022 EP 22203242**

(43) Date of publication of application:
**03.07.2024 Bulletin 2024/27**

(73) Proprietor: **Evonik Operations GmbH**
**45128 Essen (DE)**

(72) Inventors:
- **PAULUS, Katharina Marie**
  **79104 Freiburg (DE)**
- **JÜRGENS, Hannes**
  **21149 Hamburg (DE)**
- **KÖPFER, Alexander**
  **79872 Bernau im Schwarzwald (DE)**
- **DANIELI, Florian**
  **79664 Wehr (DE)**
- **HASSE, Andre**
  **52428 Jülich (DE)**

(74) Representative: **Evonik Patent Association**
**c/o Evonik Industries AG**
**IP Management**
**Postcode 84/339**
**Rodenbacher Chaussee 4**
**63457 Hanau (DE)**

(56) References cited:
**US-A1- 2016 289 251**

EP 4 392 479 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to oligomeric organosilanes, to a process for preparation thereof and to the use thereof in rubber mixtures.

It is known that sulfur-containing organosilicon compounds such as 3-mercaptopropyltrimethoxysilane or bis(3-[triethoxysilyl]propyl)tetrasulfane can be used as a silane adhesion promoter or reinforcing additive in rubber mixtures with oxidic fillers, including for tyre treads and other parts of automobile tyres (DE 2 141 159, DE 2 212 239, US 3 978 103, US 4 048 206).

EP 0784072 A1 discloses rubber mixtures based on at least one elastomer with silica as a filler and a reinforcing additive which is prepared by blending or as an in situ reaction product from at least one functional polyorganosiloxane compound, and which contain a functional organosilane as a further constituent. Monomeric units used are especially 3-mercaptopropyltrialkoxysilanes or bis(trialkoxysilylpropyl)tetrasulfanes, which bear 3 and 6 alkoxy substituents respectively.

In addition, EP 0964021 discloses oligomeric organosilane polysulfanes which are not polycondensed to give a solid, and which contain the structural units A and/or B and/or C in any linear, branched or cyclic arrangement.

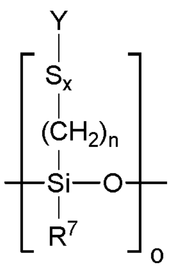
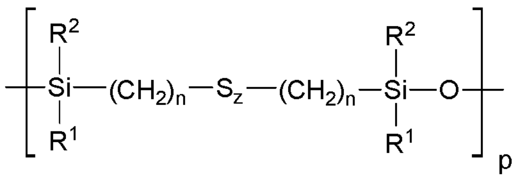
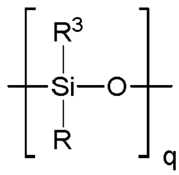

**A** **B** **C**

WO 2006/037380, EP 0997489 and EP 1273613 likewise disclose oligomeric organosilanes. In addition, US 7368584 discloses mercapto-functional silane compositions comprising at least one mercapto-functional silane having the chemical structure $[G^1\text{-}/SiX^{\alpha}_uZ^{\beta}_vZ^{\theta}_w)_s]_m[(HS)_r\text{-}G^2\text{-}(SiX^{\alpha}_uZ^{\beta}_vZ^{\theta}_w)_s]_n$.

EP 3094686 discloses oligomeric organosilanes containing at least two different structural units within a molecule, selected from the structural units A, B, C and D joined in any desired linear, branched or cyclic arrangement

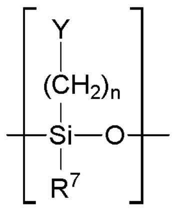

**A** ,

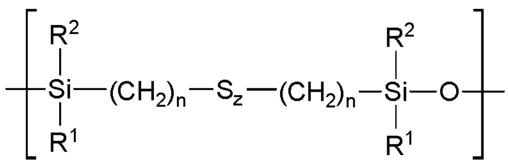

**B** ,

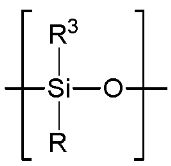

**C** ,

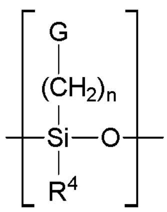

**D** .

US 2016/289251 A1 discloses in its examples 1 to 4 oligomeric organosilanes, which comprise units derived from mercaptopropyltrimethoxysilane and from an alkyltriethoxysilane. In the process is also used a Marlosol compound. However, there is no diol such as 2-MPD, which could give rise to a unit (C) as disclosed herein.

Disadvantages of the known oligomeric organosilanes are poor tear resistance and/or poor storage stability.

It is an object of the present invention to provide oligomeric organosilanes having improved tear resistance

and/or improved storage stability.

The invention provides oligomeric organosilanes containing at least structural units A, B and C in any linear, branched or cyclic arrangement

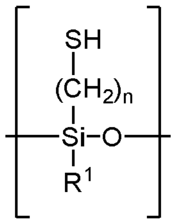
A

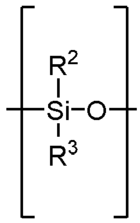
B

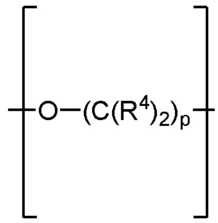
C

where n = 1-10, preferably 1-4, more preferably 3,
$R^1$ and $R^3$ are the same or different and are independently -OH, (C1-C4)alkoxy, preferably ethoxy, $OSiR^2R^3{}_2$, $OSi((CH_2)_nSH)R^3{}_2$, structural unit C which is attached via the oxygen atom to the silicon atom of structural unit A or B and is terminated by an -OH group or is attached cyclically to the oxygen of the Si-O group of the same structural unit, and
an alkyl polyether group $-O-(R^5-O)_m-R^6$
where $R^5$ is the same or different and is a branched or unbranched, saturated or unsaturated, aliphatic divalent C1-C30 hydrocarbon group, preferably $CH_2CH_2$, m has an average value of 1 to 30, preferably 5, and $R^6$ is an unsubstituted or substituted, branched or unbranched C1-C30-alkyl, preferably $C_{13}H_{17}$, C2-C30-alkenyl, a C6-C14-aryl group, or a C7-C40-aralkyl group,
$R^2$ is a branched or unbranched, saturated or unsaturated, aliphatic monovalent C1-C30, preferably C1-C8, more preferably C8, hydrocarbon group,
$R^4$ is identical or different branched or unbranched, saturated or unsaturated C1-C10-alkyl, C1-C10-alkyl-OH, C1-C10-alkyl-NH2 or H,
and p = 1-10,
which are characterized in that the molar ratio of the alkyl polyether group $-O-(R^5-O)_m-R^6$ to silicon is greater than 0.

The molar ratio of the alkyl polyether group $-O-(R^5-O)_m-R^6$ to silicon may be between 0 and 0.30, preferably between 0 and 0.10, more preferably from 0.01 to 0.09, most preferably from 0.01 to 0.08.

The molar ratio of structural unit C to silicon may be between 0 and 1.7, preferably between 0.1 and 1.5. Structural unit C may also be present in $R^1$ and/or $R^3$ and may be terminated by an OH group or be cyclically attached to the oxygen atom of the Si-O group of the same structural unit. The molar ratio of structural units A and B in the oligomeric organosilanes according to the invention may be 10:1 to 1:10, preferably 3:1 to 1:3, more preferably 2:1 to 1:2.

The alkyl polyether group may preferably be $-O-(CH_2CH_2-O)_m-R^6$, more preferably $-O-(CHzCHz-O)_5-R^6$, most preferably $-O-(CH_2CH_2-O)_5-C_{13}H_{27}$.

In the oligomeric organosilane according to the invention, it may preferably be the case that $R^1 = OC_2H_5$ or $-O-(R^5-O)_m-R^6$, $R^2 = (CH_2)_7CH_3$, $R^3 = OC_2H_5$ or $-O-(R^5-O)_m-R^6$, $R^4$ = H or $CH_3$, $R^5 = CH_2CH_2$, $R^6 = C_{13}H_{27}$, n = 3, m = 5, p = 3.

Structural unit A may be, for example,

$[-O-(EtO)Si(-(CH_2)_3-SH)-]$,
$[-O-(MeO)Si(-(CH_2)_3-SH)-]$,
$[-O-(EtO)Si(-(CH_2)_4-SH)-]$,
$[-O-(EtO)Si(-(CH_2)_5-SH)-]$,
$[-O-(EtO)Si(-(CH_2)_6-SH)-]$,
$[-O-(C_{13}H_{27}-(OCH_2CH_2)_5-O)Si(-(CH_2)_3-SH)-]$,
$[-O-(HO-CH_2-CH(CH_3)-CH_2-O)Si(-(CH_2)_3-SH)-]$,

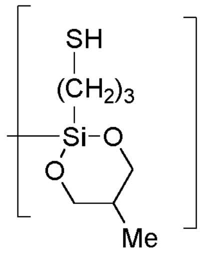,

[-O-(HO-$CH_2$-$CH_2$-O)Si(-$(CH_2)_3$-SH)-],
[-O-((EtO)$_2$Si($(CH_2)_3$-SH)-O-)Si(-$(CH_2)_3$-SH)-],
[-O-(($C_{13}H_{27}$-$(OCH_2CH_2)_5$-O)(EtO)Si(-$(CH_2)_3$-SH)-O-)Si($(CH_2)_3$-SH)-],
[-O-((HO-$CH_2$-CH($CH_3$)-$CH_2$-O)(EtO)Si(-$(CH_2)_3$-SH)-O-)Si($(CH_2)_3$-SH)-],
[-O-((EtO)$_2$Si($(CH_2)_7$-$CH_3$)-O-)Si(-$(CH_2)_3$-SH)-],
[-O-(($C_{13}H_{27}$-$(OCH_2CH_2)_5$-O)(EtO)Si(-$(CH_2)_7$-$CH_3$)-O-)Si($(CH_2)_3$-SH)-] or
[-O-((HO-$CH_2$-CH($CH_3$)-$CH_2$-O)(EtO)Si(-$(CH_2)_7$-$CH_3$)-O-)Si($(CH_2)_3$-SH)-].

Structural unit B may be, for example,

[-O-(MeO)Si(-$(CH_2)_7$-$CH_3$)-],
[-O-(EtO)Si(-$(CH_2)_2$-$CH_3$)-],
[-O-(EtO)Si(-$(CH_2)_3$-$CH_3$)-],
[-O-(EtO)Si(-$(CH_2)_4$-$CH_3$)-],
[-O-(EtO)Si(-$(CH_2)_5$-$CH_3$)-],
[-O-(EtO)Si(-$(CH_2)_6$-$CH_3$)-],
[-O-(EtO)Si(-$(CH_2)_7$-$CH_3$)-],
[-O-(EtO)Si(-$(CH_2)_2$-CH$(CH_3)_2$)-],
[-O-(EtO)Si(-$(CH_2)_{15}$-$CH_3$)-],
[-O-($C_{13}H_{27}$-$(OCH_2CH_2)_5$-O)Si(-$(CH_2)_2$-$CH_3$)-],
[-O-($C_{13}H_{27}$-$(OCH_2CH_2)_5$-O)Si(-$(CH_2)_3$-$CH_3$)-],
[-O-($C_{13}H_{27}$-$(OCH_2CH_2)_5$-O)Si(-$(CH_2)_4$-$CH_3$)-],
[-O-($C_{13}H_{27}$-$(OCH_2CH_2)_5$-O)Si(-$(CH_2)_5$-$CH_3$)-],
[-O-($C_{13}H_{27}$-$(OCH_2CH_2)_5$-O)Si(-$(CH_2)_6$-$CH_3$)-],
[-O-($C_{13}H_{27}$-$(OCH_2CH_2)_5$-O)Si(-$(CH_2)_7$-$CH_3$)-],
[-O-($C_{13}H_{27}$-$(OCH_2CH_2)_5$-O)Si(-$(CH_2)_2$-CH$(CH_3)_2$)-],
[-O-( $C_{13}H_{27}$-$(OCH_2CH_2)_5$-O)Si(-$(CH_2)_{15}$-$CH_3$)-],
[-O-(HO-$CH_2$-CH($CH_3$)-$CH_2$-O)Si(-$(CH_2)_2$-$CH_3$)-],
[-O-(HO-$CH_2$-CH($CH_3$)-$CH_2$-O)Si(-$(CH_2)_3$-$CH_3$)-],
[-O-(HO-$CH_2$-CH($CH_3$)-$CH_2$-O)Si(-$(CH_2)_4$-$CH_3$)-],
[-O-(HO-$CH_2$-CH($CH_3$)-$CH_2$-O)Si(-$(CH_2)_5$-$CH_3$)-],
[-O-(HO-$CH_2$-CH($CH_3$)-$CH_2$-O)Si(-$(CH_2)_6$-$CH_3$)-],
[-O-(HO-$CH_2$-CH($CH_3$)-$CH_2$-O)Si(-$(CH_2)_7$-$CH_3$)-],
[-O-(HO-$CH_2$-CH($CH_3$)-$CH_2$-O)Si(-$(CH_2)_2$-CH$(CH_3)_2$)-],
[-O-(HO-$CH_2$-CH($CH_3$)-$CH_2$-O)Si(-$(CH_2)_{15}$-$CH_3$)-],
[-O-(HO-$CH_2$-$CH_2$-O)Si(-$(CH_2)_2$-$CH_3$)-],
[-O-(HO-$CH_2$-$CH_2$-O)Si(-$(CH_2)_3$-$CH_3$)-],
[-O-(HO-$CH_2$-$CH_2$-O)Si(-$(CH_2)_4$-$CH_3$)-],
[-O-(HO-$CH_2$-$CH_2$-O)Si(-$(CH_2)_5$-$CH_3$)-],
[-O-(HO-$CH_2$-$CH_2$-O)Si(-$(CH_2)_6$-$CH_3$)-],
[-O-(HO-$CH_2$-$CH_2$-O)Si(-$(CH_2)_7$-$CH_3$)-],
[-O-(HO-$CH_2$-$CH_2$-O)Si(-$(CH_2)_2$-CH$(CH_3)_2$)-],

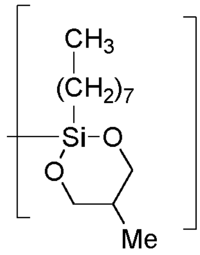

,

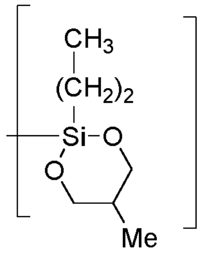

or

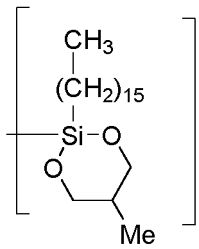

In the oligomeric organosilane according to the invention, structural unit C may more preferably be [-O-$CH_2$-CH(CH)$_3$-$CH_2$-] or [-O-CHz-CHz-].

The oligomeric organosilane according to the invention may most preferably contain the structural units

A = [-O-(EtO)Si(-($CH_2$)$_3$-SH)-] or [-O-($C_{13}H_{27}$-($OCH_2CH_2$)$_5$-O)Si(-($CH_2$)$_3$-SH)-] or [-O-(HO-$CH_2$-CH($CH_3$)-$CH_2$-O)Si(-($CH_2$)$_3$-SH)-] or

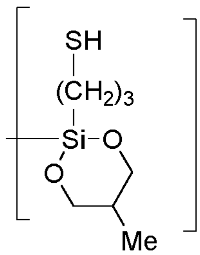

and

B = [-O-(EtO)Si(-($CH_2$)$_7$-$CH_3$)-] or [-O-($C_{13}H_{27}$-($OCH_2CH_2$)$_5$-O)Si(-($CH_2$)$_7$-$CH_3$)-] or [-O-(HO-$CH_2$-CH($CH_3$)-$CH_2$-O)Si(-($CH_2$)$_7$-$CH_3$)-] or

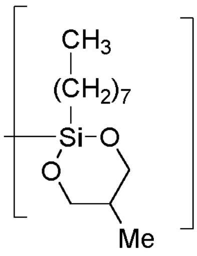

and

C = [-O-$CH_2$-CH(CH)$_3$-$CH_2$-].

The present invention further provides a process for preparing the oligomeric organosilanes according to the invention, which is characterized in that a mercaptosilane D, an alkylsilane E, a polyol F,

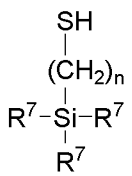

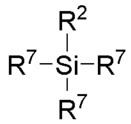

$HO-(C(R^4)_2)_p-OH$

D E F

an alkyl polyether alcohol of the formula HO-($R^5$-O)$_m$-$R^6$ where $R^2$, $R^4$, $R^5$, $R^6$ n, m, p have the same definition as defined above,

$R^7$ is the same or different and is -OH, (C1-C4)-alkoxy, preferably ethoxy, or an alkyl polyether group -O-($R^5$-O)$_m$-$R^6$ where $R^5$ is the same or different and is a branched or unbranched, saturated or unsaturated, aliphatic divalent C1-C30 hydrocarbon group, preferably $CH_2CH_2$, m has an average value of 1 to 30, preferably 5, and $R^6$ is an unsubstituted or substituted, branched or unbranched C1-C30-alkyl, preferably $C_{13}H_{17}$, C2-C30-alkenyl, a C6-C14-aryl group, or a C7-C40-aralkyl group,

and a catalyst are mixed and reacted at a temperature of 20-180°C, preferably 90°C-150°C.

The reaction can be effected within 30 min - 10 h, preferably within 30 min - 3 h.

The reaction can be effected with stirring.

The secondary components can be separated off by distillation.

The secondary components can be separated off by distillation during the reaction or thereafter.

The secondary components can preferably be separated off during the reaction.

The secondary components can be separated off by distillation at atmospheric pressure or reduced pressure. The secondary components can preferably be separated off by distillation under reduced pressure. More preferably, they can be separated off by distillation at a pressure of 20-200 mbar.

Components D and E may be used in a molar ratio of 1:10 to 10:1, preferably of 1:3 to 3:1, more preferably of 1:2 to 2:1.

Components D and F may be used in a molar ratio of 1:1 to 1:10. Preferably, components D and F may be used in a molar ratio of 1:2 to 1:10. More preferably, components D and F may be used in a molar ratio of 1:2 to 1:4. Most preferably, components D and F may be used in a molar ratio of 1:2 to 1:3.

Component D and the alkyl polyether alcohol of the formula HO-($R^5$-O)$_m$-$R^6$ may be used in a molar ratio of 1:0.01 to 1:2. Preferably, component D and the polyether alcohol of the formula HO-($R^5$-O)$_m$-$R^6$ may be used in a molar ratio of 1:0.1 to 1:1.

The catalyst may be added in catalytic or stoichiometric amounts. In this context, all kinds of acidic, basic or nucleophilic catalysts which are known to those skilled in the art from the SOLGEL chemistry of alkoxysilanes (see, for example, R. Corriu, D. Leclercq, Angew. Chem. 1996, 108, 1524-1540) are also suitable for the oligomerization in the context of the invention. It is unimportant here whether the catalysts are in the same phase as the reaction solution (homogeneous catalysis) or are in the form of solids (heterogeneous catalysis) and are removed after the reaction has ended.

Preferably, the homogeneous catalysis can be conducted with a transition metal complex, for example tetrabutyl

orthotitanate, or a transition metal salt. Basic catalysis can be effected, for example, with an organic base such as triethylamine, tetramethylpiperidine, tributylamine or pyridine, or with an inorganic base such as NaOH, KOH, $Ca(OH)_2$, $Na_2CO_3$, $K_2CO_3$, CaCOs, CaO, NaHCOs, KHCOs or alkoxides such as $NaOCH_3$ or $NaOC_2H_5$. Acidic catalysis can be effected with dilute aqueous mineral acids, such as $H_2SO_4$ or HCl, or solutions of Lewis acid in water. Preferably, the catalyst used may be a transition metal complex, KOH, NaOH, ammonium fluoride, $H_2SO_4$ or HCl.

More preferably, the catalyst used may be a transition metal complex.

Most preferably, the catalyst used may be tetrabutyl orthotitanate.

The process according to the invention can be performed in solvent-free form or in the presence of a solvent, preferably in solvent-free form.

Solvents may be an inert organic solvent or mixture thereof, for example an aromatic solvent such as chlorobenzene, a halogenated hydrocarbon, for example chloroform, methylene chloride, an ether, for example diisopropyl ether, tert-butyl methyl ether, tetrahydrofuran or diethyl ether, acetonitrile, a carboxylic ester, for example ethyl acetate, methyl acetate, isopropyl acetate, or an alcohol, for example methanol, ethanol, n-propanol, i-propanol, n-butanol, sec-butanol or tert-butanol.

The mercaptosilane of the formula D may, for example, be

3-mercaptopropyltrimethoxysilane,
3-mercaptopropyltriethoxysilane,
4-mercaptobutyltriethoxysilane,
5-mercaptopentyltriethoxysilane or
6-mercaptohexyltriethoxysilane.

The alkylsilane of the formula E may, for example, be

methyltrimethoxysilane,
methyltriethoxysilane,
propyltrimethoxysilane,
propyltriethoxysilane,
butyltrimethoxysilane,
butyltriethoxysilane,
isobutyltrimethoxysilane,
isobutyltriethoxysilane,
pentyltrimethoxysilane,
pentyltriethoxysilane,
hexyltrimethoxysilane,
hexylltriethoxysilane,
octyltrimethoxysilane,
octyltriethoxysilane,
hexadecyltrimethoxysilane or
hexadecyltriethoxysilane.

The polyol of the formula F may, for example, be

propane-1,3-diol,
propane-1,2,3-triol,
2-methylpropane-1,3-diol or
ethane-1,2-diol.

The alkyl polyether alcohol may, for example, be
$C_{13}H_{27}-(OCH_2CH_2)_5-OH$.

The catalyst can remain in the product after the reaction, be deactivated, preferably by neutralization, or be removed, preferably by filtration. More preferably, the catalyst may not be deactivated after the reaction and remain in the product.

The invention further provides for the use of the oligomeric organosilanes according to the invention in rubber mixtures.

The invention further provides rubber mixtures comprising the oligomeric organosilanes according to the invention.

The rubber mixtures according to the invention can be used for production of shaped bodies, especially pneumatic tyres or tyre treads.

The rubber mixtures according to the invention may comprise rubber, filler, preferably precipitated silica, optionally further rubber auxiliaries, and at least one oligomeric organosilane according to the invention.

The use of the oligomeric organosilanes according to the invention in rubber blending processes distinctly reduces the unpleasant release of alcohol because of the precondensation that has already taken place. Compared to the usual mode of operation, for example by simple use of bis(3-[triethoxysilyl]propyl)tetrasulfane (TESPT) as adhesion promoter, evolution of alcohol is reduced during the blending operation.

Rubber used may be natural rubber and/or synthetic rubbers. Preferred synthetic rubbers are described, for example, in W. Hofmann, H. Gupta, "Handbuch der Kautschuktechnologie"

[Handbook of Rubber Technology], Dr. Gupta Verlag, Ratingen 2001, chapter 3, p. 2-4. They may include:

- polybutadiene (BR),
- polyisoprene (IR),
- styrene/butadiene copolymers, for example emulsion SBR (E-SBR) or solution SBR (S-SBR), preferably having styrene contents of 1% to 60% by weight, more preferably 5% to 50% by weight (SBR),
- chloroprene (CR),
- isobutylene/isoprene copolymers (IIR),
- butadiene/acrylonitrile copolymers having acrylonitrile contents of 5% to 60%, preferably 10% to 50%, by weight of (NBR),
- partly hydrogenated or fully hydrogenated NBR rubber (HNBR),
- ethylene/propylene/diene copolymers (EPDM),
- abovementioned rubbers which also have functional groups, e.g. carboxy, silanol or epoxy groups, for example epoxidized NR, carboxy-functionalized NBR or amine($NR_2$), silanol(-SiOH)-, epoxy-, mercapto-, hydroxy-, or siloxy(-Si-OR)-functionalized SBR,

and mixtures of these rubbers. The rubbers mentioned may additionally be silicon- or tin-coupled. In a preferred embodiment, the rubbers may be sulfur-vulcanizable. For the production of car tyre treads, it is possible in particular to use anionically polymerized S-SBR rubbers (solution SBR) with a glass transition temperature above -50°C, and also mixtures of these with diene rubbers. It is possible with particular preference to use S-SBR rubbers having a butadiene content with a vinyl fraction of more than 20% by weight. It is possible with very particular preference to use S-SBR rubbers having a butadiene content with a vinyl fraction of more than 50% by weight.

It is preferably possible to use mixtures of the abovementioned rubbers which have an S-SBR content of more than 50% by weight, preferably more than 60% by weight.

The rubber may be a functionalized rubber, where the functional groups may be amine and/or amide and/or urethane and/or urea and/or aminosiloxane and/or siloxane and/or silyl and/or alkylsilyl, for example N,N-bis(trimethylsilyl)aminopropylmethyldiethoxysilane or methyltriphenoxysilane, and/or halogenated silyl and/or silane sulfide and/or thiol and/or hydroxyl and/or ethoxy and/or epoxy and/or carboxyl and/or tin, for example tin tetrachloride or dibutyldichlorotin, and/or silanol and/or hexachlorodisiloxane and/or thiocarboxy and/or nitrile and/or nitroxide and/or amido and/or imino and/or urethane and/or urea and/or dimethylimidazolidinone and/or 2-methyl-2-thiazoline and/or 2-benzothiazoleacetonitrile and/or 2-thiophenecarbonitrile and/or 2-(N-methyl-N-3-trimethoxysilylpropyl)thiazoline and/or carbodiimide and/or N-substituted aminoaldehyde and/or N-substituted aminoketone and/or N-substituted aminothioaldehyde and/or N-substituted aminothioketone and/or benzophenone and/or thiobenzophenone with amino group and/or isocyanate and/or isothiocyanate and/or hydrazine and/or sulfonyl and/or sulfinyl and/or oxazoline and/or ester groups.

The rubber mixture according to the invention may contain at least one filler.

Fillers usable for the rubber mixtures according to the invention include the following fillers:

- Carbon blacks: The carbon blacks may be produced by the lamp-black process, furnace-black process, gas-black process or thermal process and have BET surface areas of from 20 to 200 $m^2/g$. The carbon blacks may optionally also contain heteroatoms, such as Si for example.
- Amorphous silicas produced for example by precipitation from solutions of silicates or flame-hydrolysis of silicon halides with specific surface areas of from 5 to 1000 $m^2/g$, preferably from 20 to 400 $m^2/g$ (BET surface area) and with primary particle sizes of from 10 to 400 nm. The silicas may optionally also be in the form of mixed oxides with other metal oxides, such as oxides of Al, Mg, Ca, Ba, Zn and titanium.
- Synthetic silicates, such as aluminium silicate, alkaline earth metal silicates such as magnesium silicate or calcium silicate, having BET surface areas of 20 to 400 $m^2/g$ and primary particle diameters of 10 to 400 nm.
- Synthetic or natural aluminium oxides and synthetic or natural aluminium hydroxides.
- Natural silicates, such as kaolin and other naturally occurring silicas.
- Glass fibres and glass-fibre products (mats, strands) or glass microbeads.

It is possible with preference to use amorphous silicas prepared by precipitation from solutions of silicates, with BET surface areas of 20 to 400 $m^2/g$, more preferably 100 $m^2/g$ to 250 $m^2/g$, in amounts of 5 to 150 parts by weight, based in each case on 100 parts of rubber.
With very particular preference, it is possible to use precipitated silicas as filler.
The fillers mentioned may be used alone or in a mixture.
The rubber mixtures according to the invention may contain 5 to 150 parts by weight of filler and 0.1 to 30 parts by weight, preferably 1 to 25 parts by weight, more preferably 2 to 20 parts by weight, of the oligomeric organosilanes according to the invention, wherein the parts by weight are based on 100 parts by weight of rubber.
The oligomeric organosilanes according to the invention may be used as adhesion promoter between inorganic materials, for example glass beads, glass flakes, glass surfaces, glass fibres, or oxidic fillers, preferably silicas such as precipitated silicas and fumed silicas,
and organic polymers, for example thermosets, thermoplastics or elastomers, or as crosslinking agents and surface modifiers for oxidic surfaces.
The oligomeric organosilanes according to the invention may be used as coupling reagents in filled rubber mixtures, examples being tyre treads, industrial rubber articles or footwear soles.
The rubber mixtures according to the invention may comprise further rubber auxiliaries, such as reaction accelerators, ageing stabilizers, heat stabilizers, light stabilizers, antiozonants, processing aids, plasticizers, resins, tackifiers, blowing agents, dyes, pigments, waxes, extenders, organic acids, retarders, metal oxides, and activators such as diphenylguanidine, triethanolamine, polyethylene glycol, alkoxy-terminated polyethylene glycol alkyl-O-$(CH_2-CH_2-O)_{y^I}$-H with $y^I$ = 2-25, preferably $y^I$ = 2-15, more preferably $y^I$ = 3-10, most preferably $y^I$ = 3-6, or hexanetriol, that are familiar to the rubber industry.
The rubber auxiliaries may be used in familiar amounts determined by factors including the end use. Customary amounts may, for example, be amounts of 0.1% to 50% by weight based on rubber. Crosslinkers used may be peroxides, sulfur or sulfur donor substances. The rubber mixtures according to the invention may further comprise vulcanization accelerators. Examples of suitable vulcanization accelerators may be mercaptobenzothiazoles, sulfenamides, thiurams, dithiocarbamates, thioureas and thiocarbonates. The vulcanization accelerators and sulfur may be used in amounts of 0.1% to 10% by weight, preferably 0.1% to 5% by weight, based on 100 parts by weight of rubber.
The rubber mixtures according to the invention can be vulcanized at temperatures of 100°C to 200°C, preferably 120°C to 180°C, optionally at a pressure of 10 to 200 bar. The blending of the rubbers with the filler, any rubber auxiliaries and the oligomeric organosilanes according to the invention can be conducted in known mixing units, such as rollers, internal mixers and mixing extruders.
The rubber mixtures according to the invention can be used for production of moulded articles, for example for the production of tyres, especially pneumatic tyres or tyre treads, cable sheaths, hoses, drive belts, conveyor belts, roller coverings, footwear soles, sealing rings and damping elements.
The oligomeric organosilanes according to the invention and the fillers are preferably added at mass temperatures of 100 to 200°C, but can also be added at a later stage at lower temperatures (40 to 100°C), for example together with further rubber auxiliaries.
The oligomeric organosilanes can be added to the blending operation either in pure form or else applied to an inert organic or inorganic carrier. Preferred carrier materials are silicas, natural or synthetic silicate, aluminium oxide or carbon blacks.
The oligomeric organosilanes according to the invention are obtainable by the process according to the invention.
The oligomeric organosilanes according to the invention have improved storage stability and/or, in rubber mixtures, the advantage of improved tear resistance.

GC analysis:

Determination of free ethanol/OCTEO/MPTES/2-methylpropan-2-ol

The volatile components are determined by gas chromatography by the internal standard method. For this purpose, calibration of the individual components is conducted with an internal standard such as n-nonane, n-decade or n-dodecane in an appropriate solvent. The gas chromatograph used is an HP 6850 or HP7820 with a TCD detector. The separating column used is an HP5 column having the following properties: length: 30 m; internal diameter: 0.53 mm with a film thickness of 2.65 mm. Alternatively, an HP1 column having the following properties is used: length: 30 m; internal diameter: 0.53 mm with a film thickness of 1.50 mm. The temperature is 250°C, the detector temperature 280°C. The temperature program of the column oven is: 50°C - 5 min - 15°C/min - 275°C - 15 min. The carrier gas used is helium with a flow rate of ~ 4 ml/min and a split ratio of 1:50 to 1:100. The amount of sample injected is 0.4 ml.
This method is employed analogously for the determination of other alcohols, for example methanol.
Calculation of the content of the sample:

$$c_i = \frac{f_i \times A_i \times m_{St}}{A_{St} \times m_P}$$

$c_i$ = concentration of the components i to be determined
$f_i$ = calibration factor of component i
Ast = peak area of the internal standard
$A_i$ = peak area of the component i to be determined
mst = weight of the internal standard
$m_P$ = weight of the sample

**Gas chromatography determination of the ethanol after hydrolysis:**

The determination of the ethanol after hydrolysis can be effected by the hydrolysis of the silane by means of sulfuric acid (20 w%). Subsequently, water and sodium hydroxide (20 w%) are added. The resultant mixture is subjected to steam distillation with a suitable apparatus. The distillate is collected in a corresponding standard flask, 2-butanol is added as internal standard, and the mixture is made up to the mark with distilled water.

The gas chromatograph used is a capillary gas chromatograph with FID and evaluation software, for example HP7820 with OpenLab. The separating column has the following properties: length: 30 m; internal diameter: 0.32 mm; film thickness 1.00 mm; stationary phase: Stabiwax (#10654-6850). The injector temperature is 250°C, the detector temperature 280°C. The column oven: 90°C - 10 min - 25°C/min - 240°C - 0 min. The carrier gas used is helium with a flow rate of ~ 2 ml/min and a split ratio of ~ 1:50. The combustion gas used is a hydrogen/synthetic air mixture. The amount of sample injected is 1.0 ml.

This method is analogously applicable to the determination of other hydrolysable alkoxy groups, for example methoxy groups.

Calculation of the content of the sample:

$$c_i = \frac{f_i \times A_i \times m_{St}}{A_{St} \times m_P}$$

$c_i$ = concentration of the components i to be determined
$f_i$ = calibration factor of component i
Ast = peak area of the internal standard
$A_i$ = peak area of the component i to be determined
mst = weight of the internal standard
$m_P$ = weight of the sample

NMR analysis:

In addition, the trialkoxysilane content, and also M, D and T structures, can be determined using $^{29}$Si NMR spectrometry, which is likewise well known to the person skilled in the art. The solvent used is deuterated chloroform with tetramethylsilane as internal standard.

$^{29}$Si NMR (79.5 MHz): 40-46 ppm (trialkoxysilane); 50-54 ppm (M structures); 57-61 ppm (D structures); 61-65 ppm (T structures).

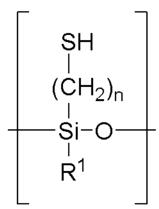
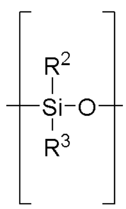
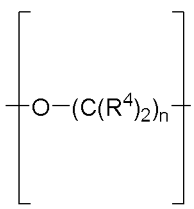

A B C

The molar proportion of silicon-containing groups (structural units A, B) and of structural unit C, and of the attached alkyl polyether group ($R^1$, $R^3$ = $-O-(R^5-O)_m-R^6$), can be determined by using $^{13}$ C NMR spectroscopy, which

is likewise well known to the person skilled in the art. The solvent used is deuterated chloroform with tetramethylsilane as internal standard and chromium acetylacetonate. Structural unit C may also be present in R' and/or $R^3$ and may be terminated by an OH group or be cyclically attached to the oxygen atom of the Si-O group of the same structural unit.

The oligomeric silanes were characterized by spectroscopic determination of the following ratios via integration of the corresponding $^{13}$C NMR signals:

Molar ratio of structural unit C to silicon:

$$[A + B] / [C]$$

Molar ratio of the alkyl polyether group $-O-(R^5-O)_m-R^6$ to silicon:

$$[-O-(R^5-O)_m-R^6] / [A + B] = \text{polyether alcohol} / Si$$

Molar ratio of structural units A and B:

$$[A] / [B]$$

Examples

Octyltriethoxysilane (OCTEO) and VP Si 263® (MPTES, 3-mercaptopropyltriethoxysilane) are silanes from Evonik Operations GmbH.

Marlosol is a polyether alcohol of the formula $HO-(R^5-O)_m-R^6$ with $R^5 = CH_2CH_2$, $R^6 = C_{13}H_{27}$ and m = 5 from Sasol.

**Comparative Example 1,** corresponding to Example 3 from US7369584 (MPTES:OCTEO:2-MPD = 1:2.33:10)

An initial charge of 3-mercaptopropyltriethoxysilane (MPTES) (1.00 eq; 0.34 mol; 81.00 g) together with octyltriethoxysilane (OCTEO) (2.33 eq; 0.79 mol; 219.00 g) in a round-bottom flask is mixed. Concentrated sulfuric acid (0.010 eq; 3.60 mmol; 0.30 g) is added to the mixture. Subsequently, a vacuum of 67 mbar is applied and the mixture is heated to 50°C. As soon as 50°C has been attained, 2-methylpropane-1,3-diol (2-MPD) (10 eq; 3.395 mol; 306.00 g) is metered in within 30 min. The ethanol formed is removed by distillation. On completion of metered addition, the mixture is stirred for a further 4.5 h. As soon as the product has cooled down to room temperature, sodium ethoxide (w = 21%; 0.012 eq; 4.30 mmol; 1.45 g) is added to neutralize the sulfuric acid.

Analysis:

- GC:

  free ethanol: 3.6%
  ethanol after hydrolysis: 4.3%
  MPTES (1.1%), OCTEO (< 0.1%), 2-methylpropane-1,3-diol (38%)

$^{13}$C NMR (100 MHz): δ (ppm) 27.5 (m, $Si-(CH_2)_3-SH$), 29.2 (m, $Si-(CH_2)_7-CH_3$), 64.0 - 65.8 (m, $-(O-CH_2)_2CH(CH_3)$), 70.1-70.8 (m, $-O-CH_2-CH(CH_3)-CH_2-OH$).

Molar ratio of the alkyl polyether group $-O-(R^5-O)_m-R^6$ to silicon:

$$[-O-(R^5-O)_m-R^6] / [A + B] = 0.0:1$$

Molar ratio of structural unit C to silicon:

$$[C] / [A + B] = 1.75$$

Molar ratio of structural units A and B:

$$[A] / [B] = 0.4:1$$

$^{29}Si$ NMR: trialkoxysilanes: 94 mol%; M structures: 6 mol%
$^{29}Si$ NMR after 4 months: trialkoxysilanes: 88 mol%; M structures: 12 mol%
**Comparative Example 2,** corresponding to example 1 from EP 3094686 (MPTES:OCTEO:Marlosol = 1:0.5:0.5) - 0.8 eq $H_2O$

An initial charge of 3-mercaptopropyltriethoxysilane (1.00 eq; 1.75 mol; 417.00 g) together with octyltriethoxysilane (0.50 eq; 0.880 mol; 242.00 g) is heated to 85°C. A mixture of $H_2O$ (0.8 eq; 2.11 mol; 38.00 g) and concentrated hydrochloric acid (w = 37%; 0.005 eq; 8.00 mmol; 0.30 g) in ethanol (4.50 eq; 7.88 mol; 363.00 g) is slowly added dropwise, and the reaction mixture is stirred for a further 8.5 h. The solvent and the alcohol of hydrolysis are removed under reduced pressure. To the oligomer thus obtained are added Marlosol (0.50 eq; 0.880 mol; 368.00 g) and tetra-n-butyl titanate (0.0008 eq; 1.469 mmol; 0.50 g). The mixture is heated to 140°C and the temperature is maintained for 1 h. The ethanol formed is removed by distillation under reduced pressure.

Analysis:

- GC:

  free ethanol: 0.7%
  ethanol after hydrolysis: 3.7%
  MPTES (0.3%), OCTEO (0.1%)

$^{13}C$ NMR (100 MHz): δ (ppm) = 27.5 (m, $Si-(CH_2)_3-SH$), 29.2 (m, $Si-(CH_2)_7-CH_3$), 61.2 ($HO-(CH_2-CH_2-O)_5-C_{13}H_{27}$), 61.5 ($Si-O-(CH_2-CH_2-O)_5-C_{13}H_{27}$).

Molar ratio of the alkyl polyether group $-O-(R^5-O)_m-R^6$ to silicon:

$$[-O-(R^5-O)_m-R^6] / [A + B] = 0.5:1$$

Molar ratio of structural units A and B:

$$[A] / [B] = 1.8:1$$

$^{29}Si$ NMR: trialkoxysilanes: 0 mol%; M structures: 48 mol%; D structures: 38 mol%; T structures: 14 mol%

$^{29}Si$ NMR after 4 months: trialkoxysilanes: 0 mol%; M structures: 62 mol%; D structures: 35 mol%; T structures: 3 mol%

**Example 1** (MPTES:OCTEO:2-MPD:Marlosol = 1:2.33:10:1)

An initial charge of 3-mercaptopropyltriethoxysilane (1.00 eq; 0.344 mol; 81.00 g), octyltriethoxysilane (2.33 eq; 0.794 mol; 219.00 g) and Marlosol (1.00 eq; 1.132 mol; 476.12 g) together with tetra-n-butyl titanate (0.0026 eq; 0.88 mmol; 0.30 g) is heated to 130°C. The ethanol formed is removed by distillation. As soon as the mixture has reached 130°C, a vacuum of 200 mbar is applied, which is maintained for 30 minutes. Next, the pressure is reduced to 100 mbar for 30 minutes. The reaction mixture is cooled down to room temperature and 2-methylpropane-1,3-diol (10.0 eq; 3.395 mol; 306.00 g) and tetra-n-butyl titanate (0.0026 eq; 0.88 mmol; 0.30 g) are added, and the mixture is heated again to 130°C. The ethanol formed is removed by distillation. As soon as the mixture has reached 130°C, a vacuum of 200 mbar is applied, which is maintained for 30 minutes, then the pressure is reduced to 20 mbar within 30 minutes. The vacuum of 20 mbar is maintained for 1 h and the mixture is cooled back down to room temperature.

Analysis:

- GC:

  free ethanol: 0.1%
  ethanol after hydrolysis: 0.2%
  MPTES (< 0.1%), OCTEO (< 0.1%), 2-methylpropane-1,3-diol (22%)

$^{13}C$ NMR (100 MHz): δ (ppm) = 27.5 (m, Si-$(CH_2)_3$-SH), 29.2 (m, Si-$(CH_2)_7$-$CH_3$), 61.2 (HO-(CH2-CH2-O)$_5$-C13H27), 61.5 (Si-O-(CH2-CH2-O)$_5$-C13H27), 64.0-65.8 (m, -(O-$CH_2$)$_2$CH($CH_3$)), 70.1-70.8 (m, -O-$CH_2$-CH($CH_3$)-$CH_2$-OH).

Molar ratio of structural unit C to silicon:

$$[C] / [A + B] = 1.16$$

Molar ratio of the alkyl polyether group -O-($R^5$-O)$_m$-$R^6$ to silicon:

$$[–O-(R^5-O)_m-R^6] / [A + B] = 0.22:1$$

Molar ratio of structural units A and B:

$$[A] / [B] = 0.5:1$$

$^{29}Si$ NMR: trialkoxysilanes: 100 mol%

$^{29}Si$ NMR after 4 months: trialkoxysilanes: 83 mol%; M structures: 17 mol%

**Example 2** (MPTES:OCTEO:2-MPD:Marlosol = 1:1:2.95:0.1)

An initial charge of 3-mercaptopropyltriethoxysilane (1.00 eq; 2.20 mol; 524.57 g), octyltriethoxysilane (1.00 eq; 2.20 mol; 602.20 g), 2-methylpropane-1,3-diol (2.95 eq; 6.425 mol; 579.00 g), Marlosol (0.10 eq; 0.216 mol; 90.69 g) and tetra-n-butyl titanate (0.00076 eq; 2.00 mmol; 0.57 g) is heated to 130°C. The temperature is maintained for 1.5 h. The ethanol formed is removed by distillation under reduced pressure (200-20 mbar), then the product obtained is cooled down to room temperature.

Analysis:

- GC:

  free ethanol: 0.5%
  ethanol after hydrolysis: 0.5%
  MPTES (< 0.1%), OCTEO (1.1%), 2-methylpropane-1,3-diol (0.6%)

$^{13}C$ NMR (100 MHz): δ (ppm) = 27.5 (m, Si-$(CH_2)_3$-SH), 29.2 (m, Si-$(CH_2)_7$-$CH_3$), 61.2 (HO-(CH2-CH2-O)$_5$-C13H27), 61.5 (Si-O-(CH2-CH2-O)$_5$-C13H27), 64.0-65.8 (m, -(O-$CH_2$)$_2$CH($CH_3$)), 70.1-70.8 (m, -O-$CH_2$-CH($CH_3$)-$CH_2$-OH).

Molar ratio of structural unit C to silicon:

$$[C] / [A + B] = 1.40$$

Molar ratio of the alkyl polyether group $-O-(R^5-O)_m-R^6$ to silicon:

$$[-O-(R^5-O)_m-R^6] / [A + B] = 0.01:1$$

Molar ratio of structural units A and B:

$$[A] / [B] = 1:1$$

$^{29}Si$ NMR: trialkoxysilanes: 100 mol%

$^{29}Si$ NMR after 4 months: trialkoxysilanes: 95 mol%; M structures: 5 mol%

**Example 3** (MPTES:OCTEO:2-MPD:Marlosol = 1:0.5:2:0.5)

An initial charge of 3-mercaptopropyltriethoxysilane (1.00 eq; 1.75 mol; 417.00 g), octyltriethoxysilane (0.50 eq; 0.88 mol; 242.00 g), 2-methylpropane-1,3-diol (2.00 eq; 3.50 mol; 315.42 g), Marlosol (0.50 eq; 0.88 mol; 368.00 g) and tetra-n-butyl titanate (0.00038 eq; 1.67 mmol; 0.57 g) is heated to 130°C. The temperature is maintained for 1.5 h. The ethanol formed is removed by distillation under reduced pressure (200-20 mbar), then the product obtained is cooled down to room temperature.

**Analysis:**

GC:

free ethanol: 0.4%
ethanol after hydrolysis: 0.7%
MPTES (0.1%), OCTEO (0.4%), 2-methylpropane-1,3-diol (1.1%)

$^{13}$**C NMR** (100 MHz): δ (ppm) = 27.5 (m, $Si-(CH_2)_3-SH$), 29.2 (m, $Si-(CH_2)_7-CH_3$), 61.2 (HO-(CH2-CH2-O)$_5$-C13H27), 61.5 (Si-O-(CH2-CH2-O)$_5$-C13H27), 64.0-65.8 (m, $-(O-CH_2)_2CH(CH_3)$), 70.1-70.8 (m, $-O-CH_2-CH(CH_3)-CH_2-OH$).

Molar ratio of structural unit C to silicon:

$$[C] / [A + B] = 0.95$$

Molar ratio of the alkyl polyether group $-O-(R^5-O)_m-R^6$ to silicon:

$$[-O-(R^5-O)_m-R^6] / [A + B] = 0.09:1$$

Molar ratio of structural units A and B:

$$[A] / [B] = 2:1$$

**$^{29}$Si NMR:** trialkoxysilanes: 100 mol%

**$^{29}$Si NMR after 4 months:** trialkoxysilanes: 96 mol%; M structures: 4 mol%

**Example 4**

The formulation used for the rubber mixtures is specified in Table 1 below. In this table, the unit phr means parts by weight based on 100 parts of the crude rubber employed. The oligomeric silanes, based on the reference silane according to Comparative Example 1, were used in an equimolar amount based on the mercapto group, since the mercapto group is the only function that binds to the rubber.

The molar mass of the oligomeric silanes based on the mercapto group can be calculated from the integration of the $^{13}C$ and $^{29}Si$ NMR signals according to the following formula:

$$M(g/mol)=[M(R^2) * X_{13C}(R^2) + M(-(CH_2)_n\text{-}SH) * X_{13C}(-(CH_2)_n\text{-}SH) + M(-O\text{-}(C(R^4)_2)_{n\text{-}}) * X_{13C}(-O\text{-}(C(R^4)_{2n}\text{-}O)) + M(-O\text{-}(R^5\text{-}O)_m\text{-}R^6 * X_{13C}(-O\text{-}(R^5\text{-}O)_m\text{-}R^6 + M(Si) * X_{29Si}(\text{trialkoxysilanes}) + (M(SiO_{0.5}) * X_{29Si}(\text{M structures}) + (M(SiO)) * X_{29Si}(\text{D strucutres}) + (M(SiO_{1.5}) * X_{29Si}(\text{T structures})] / X_{13C}(-(CH_2)_n\text{-}SH)$$

$\chi_{13C}$ (x) = molar proportion of component x based on the total amount of silanes from integration of the $^{13}C$ NMR signals = Int(x) / (Int((-$(CH_2)_n$-SH) + Int($R^2$))

$\chi_{29Si}$ (x)= molar proportion from $^{29}Si$ NMR based on the total amount of silanes (trialkoxysilanes, M, D and T structures) from integration of the $^{29}Si$ NMR signals = Int(x) / (Int (trialkoxysilanes) + Int (M structures) + Int (D structures) + Int (T structures))

| | M (g/mol) / mercapto group |
|---|---|
| Comparative Example 1 | 977 |
| Comparative Example 2 | 540 |
| Example 1 | 1340 |
| Example 2 | 539 |
| Example 3 | 484 |

Table 1

| Substance | Amount [phr] | Amount [phr] | Amount [phr] | Amount [phr] | Amount [phr] |
|---|---|---|---|---|---|
| Stage 1 | Ref. rub-ber mixture I, cont. Comp. Ex. 1 | Ref. rub-ber mix-ture II, cont. Comp. Ex. 2 | Inv. rubber mixture I, cont. Inv. Ex. 1 | Inv. rubber mixture II, cont. Inv. Ex. 2 | Inv. rubber mixture III, cont. Inv. Ex. 3 |
| Buna VSL 4526-2 | 96.25 | 96.25 | 96.25 | 96.25 | 96.25 |
| Buna CB 24 | 30 | 30 | 30 | 30 | 30 |
| ULTRASIL® 7000 GR | 80 | 80 | 80 | 80 | 80 |
| N330 | 5 | 5 | 5 | 5 | 5 |
| ZnO Weisssiegel Spezial | 2 | 2 | 2 | 2 | 2 |
| Palmera B1804 | 2 | 2 | 2 | 2 | 2 |
| Vivatec 500 | 8.75 | 8.75 | 8.75 | 8.75 | 8.75 |
| Protector G 3108 | 2 | 2 | 2 | 2 | 2 |
| Vulkanox-4020/LG | 2 | 2 | 2 | 2 | 2 |
| Vulkanox-HS/LG | 1.5 | 1.5 | 1.5 | 1.5 | 1.5 |
| Comparative Example 1 | 8.90 | - | - | - | - |

(continued)

| Substance | Amount [phr] | Amount [phr] | Amount [phr] | Amount [phr] | Amount [phr] |
|---|---|---|---|---|---|
| Comparative Example 2 | - | 4.92 | - | - | - |
| Example 1 | - | - | 12.21 | - | - |
| Example 2 | - | - | - | 4.91 | - |
| Example 3 | - | - | - | - | 4.41 |
| Stage 2 | | | | | |
| Stage 1 batch | | | | | |
| Stage 3 | | | | | |
| Stage 2 batch | | | | | |
| Uhoo TBzTD | 0.4 | 0.4 | 0.4 | 0.4 | 0.4 |
| Vulkacit® CZ/EG-C | 1.6 | 1.6 | 1.6 | 1.6 | 1.6 |
| Sulfur | 2.0 | 2.0 | 2.0 | 2.0 | 2.0 |

The polymer Buna® VSL 4526-2 is a solution-polymerized SBR copolymer from ARLANXEO Deutschland GmbH, having a styrene content of 26% by weight and a vinyl fraction of 45% by weight. The copolymer contains 37.5% TDAE oil and has a Mooney viscosity (ML 1+4/100°C) of 50.

The polymer Buna® CB 24 is a cis-1,4-polybutadiene (neodymium type) from ARLANXEO Deutschland GmbH, having a cis-1,4 content of at least 96% and a Mooney viscosity of 44. ULTRASIL® 7000 GR is a readily dispersible silica from Evonik Industries AG and has a CTAB surface area of 160 $m^2/g$.

N330 is carbon black from Orion Engineered Carbons GmbH, TDAE oil used is Vivatec 500 from Hansen & Rosenthal GmbH & Co. KG, Vulkanox® 4020 is 6PPD from LANXESS Distribution GmbH, Vulkanox® HS/LG is TMQ from Lanxess and Protektor™ G3108 is an antiozonant wax from Paramelt B.V., Weißsiegel Spezial zinc oxide is ZnO from Grillo Zinkoxid GmbH, Palmera B1804 is palmitic/stearic acid from Caldic Deutschland GmbH & Co. KG. Vulkacit® CZ is CBS from LANXESS Distribution GmbH. Uhoo TBzTD (tetrabenzylthiuram disulfide) is a product from Hebi Uhoo Rubber Chemicals Co., Ltd., ground sulfur from Avokal GmbH.

The rubber mixture is produced in three stages in an internal mixer according to Table 2.

Table 2:

| Stage 1 | |
|---|---|
| Settings | |
| Mixing unit<br>Speed<br>Ram pressure<br>Flow temp.<br>Fill level | Werner & Pfleiderer GK 1.5E<br>65 $min^{-1}$<br>5.5 bar<br>65°C<br>0.65 |
| Mixing procedure | |
| 0 to 0.25 min<br>0.25 min to 1.25 min 1.25<br>1.25 to 2.25 min<br><br>2.25 min<br>2.25 to 3.75 min | Buna® VSL 4526-2 + Buna® CB 24<br>½ ULTRASIL® 7000 GR, silane or oligomeric organosilanes vent and purge<br>Vivatec 500 together with N330, ½ ULTRASIL® 7000 GR, Protector™ G3108, Vulkanox® HS/LG, Vulkanox® 4020<br>clean and ventilate<br>ZnO, Palmera B1804, mix and discharge at 145-155°C |
| Stage 2 | |
| Settings | |
| Mixing unit<br>Speed | as in stage 1 except:<br>75 $min^{-1}$ |

(continued)

| Stage 2 | |
|---|---|
| Settings | |
| Flow temp.<br>Fill level | 75°C<br>0.62 |
| Mixing procedure | |
| 0 to 1 min<br>1 to 3 min<br>3 min | Break up stage 1 batch<br>mix at 145-155°C<br>discharge |
| Stage 3 | |
| Settings | |
| Mixing unit<br>Speed<br>Flow temp.<br>Fill level | as in stage 1 except<br>50 $min^{-1}$<br>50°C<br>0.59 |
| Mixing procedure | |
| 0 to 2 min<br>2 min<br>Batch temp. | Stage 2 batch, Uhoo TBzTD, Vulkacit® CZ and sulfur<br>discharge and form milled sheet on laboratory roll mill<br>90-110°C |

The general method of producing rubber mixtures and vulcanizates thereof is described in W. Hofmann, H. Gupta, "Handbuch der Kautschuktechnologie", Dr. Gupta Verlag, Ratingen 2001, chapter 10, pages 1-27 and 82-107.

Rubber testing is effected in accordance with the test method specified in Table 3. Table 3:

| Physical testing | Standard/conditions |
|---|---|
| Graves tear resistance | DIN ISO 34-1, method B, measured using Z005T tensile tester from Zwick GmbH & Co. KG |

Vulcanization is effected at a temperature of 165°C for a period of 12 minutes. Table 4 reports the rubber data for the vulcanizates.

Table 4:

| Substance | Ref. rubber mix-ture I, cont. Comp. Ex. 1 | Ref. rubber mix-ture II, cont. Comp. Ex. 2 | Inv. rubber mix-ture I, cont. Inv. Ex. 1 | Inv. rubber mix-ture II, cont. Inv. Ex. 2 | Inv. rubber mix-ture III, cont. Inv. Ex. 3 |
|---|---|---|---|---|---|
| Graves tear resistance [N/mm] | 32.8 | 33.8 | 54.0 | 52.7 | 44.8 |
| The rubber mixtures containing the oligomeric silanes according to the invention show improved tear resistance over the reference mixtures. | | | | | |

## Claims

1. Oligomeric organosilanes containing at least structural units A, B and C in any linear, branched or cyclic arrangement

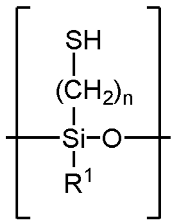 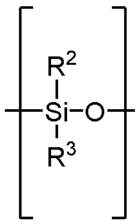 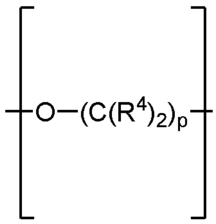

A B C

where n = 1-10, preferably 1-4, more preferably 3,
$R^1$ and $R^3$ are the same or different and are independently -OH, (C1-C4)alkoxy, preferably ethoxy, $OSiR^2R^3_2$, $OSi((CH_2)_nSH)R^3_2$,
wherein structural unit C is attached via the oxygen atom to the silicon atom of structural unit A or B to form an O-Si-O bond, and is terminated by an -OH group or
is attached cyclically to the oxygen of the Si-O group of the same structural unit, and an alkyl polyether group $-O-(R^5-O)_m-R^6$ where $R^5$ is the same or different and is a branched or unbranched, saturated or unsaturated, aliphatic divalent C1-C30 hydrocarbon group, preferably $CH_2CH_2$, m has an average value of 1 to 30, preferably 5, and $R^6$ is an unsubstituted or substituted, branched or unbranched C1-C30-alkyl, preferably C13H17, C2-C30-alkenyl, a C6-C14-aryl group, or a C7-C40-aralkyl group,
$R^2$ is a branched or unbranched, saturated or unsaturated, aliphatic monovalent C1-C30, preferably C1-C8, more preferably C8, hydrocarbon group,
$R^4$ is identical or different branched or unbranched, saturated or unsaturated C1-C10-alkyl, C1-C10-alkyl-OH, C1-C10-alkyl-$NH_2$ or H,
and p = 1-10,
**characterized in that** the molar ratio of the alkyl polyether group $-O-(R^5-O)_m-R^6$ to silicon is greater than 0.

2. Oligomeric organosilanes according to Claim 1, **characterized in that** the molar ratio of the alkyl polyether group $-O-(R^5-O)_m-R^6$ to silicon is in the range of > 0 and < 0.30, preferably in the range of > 0 and ≤ 0.10, more preferably in the range from 0.01 to 0.09, most preferably in the range from 0.01 to 0.08.

3. Oligomeric organosilanes according to Claim 1, **characterized in that** the molar ratio of structural unit C to silicon is in the range of > 0 and <1.7, preferably in the range of ≥ 0.1 and ≤ 1.5.

4. Oligomeric organosilanes according to Claim 1, **characterized in that** the molar ratio of structural units A and B is 10:1 to 1:10, preferably 3:1 to 1:3, more preferably 2:1 to 1:2.

5. Oligomeric organosilanes according to Claim 1, **characterized in that** structural unit A is $[-O-(EtO)Si(-(CH_2)_3-SH)-]$, $[-O-(MeO)Si(-(CH_2)_3-SH)-]$, $[-O-(EtO)Si(-(CH_2)_4-SH)-]$, $[-O-(EtO)Si(-(CH_2)_5-SH)-]$, $[-O-(EtO)Si(-(CH_2)_6-SH)-]$, $[-O-(C_{13}H_{27}-(OCH_2CH_2)_5-O)Si(-(CH_2)_3-SH)-]$, $[-O-(HO-CH_2-CH(CH_3)-CH_2-O)Si(-(CH_2)_3-SH)-]$,

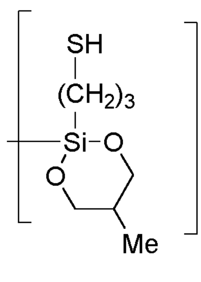,

$[-O-(HO-CH_2-CH_2-O)Si(-(CH_2)_3-SH)-]$, $[-O-((EtO)_2Si((CH_2)_3-SH)-O)Si(-(CH_2)_3-SH)-]$, $[-O-((C_{13}H_{27}-(OCH_2CH_2)_5-O)(EtO)Si(-(CH_2)_3-SH)-O)Si((CH_2)_3-SH)-]$, $[-O-(HO-CH_2-CH(CH_3)-CH_2-O)(EtO)Si(-(CH_2)_3-SH)-O)Si((CH_2)_3-SH)-]$, $[-O-((EtO)_2Si((CH_2)_7-CH_3)-O)Si(-(CH_2)_3-SH)-]$, $[-O-((C_{13}H_{27}-(OCH_2CH_2)_5-O)(EtO)Si(-(CH_2)_7-CH_3)-O)Si((CH_2)_3-SH)-]$ or $[-O-(HO-CH_2-CH(CH_3)-CH_2-O)(EtO)Si(-(CH_2)_7-CH_3)-O)Si((CH_2)_3-SH)-]$.

6. Oligomeric organosilanes according to Claim 1, **characterized in that** structural unit B is

$[-O-(MeO)Si(-(CH_2)_7-CH_3)-]$, $[-O-(EtO)Si(-(CH_2)_2-CH_3)-]$, $[-O-(EtO)Si(-(CH_2)_3-CH_3)-]$, $[-O-(EtO)Si(-(CH_2)_4-CH_3)-]$, $[-O-(EtO)Si(-(CH_2)_5-CH_3)-]$, $[-O-(EtO)Si(-(CH_2)_6-CH_3)-]$, $[-O-(EtO)Si(-(CH_2)_7-CH_3)-]$, $[-O-(EtO)Si(-(CH_2)_2-CH(CH_3)_2)-]$, $[-O-(EtO)Si(-(CH_2)_{15}-CH_3)-]$, $[-O-(C_{13}H_{27}-(OCH_2CH_2)_5-O)Si(-(CH_2)_2-CH_3)-]$, $[-O-(C_{13}H_{27}-(OCH_2CH_2)_5-O)Si(-(CH_2)_3-CH_3)-]$, $[-O-(C_{13}H_{27}-(OCH_2CH_2)_5-O)Si(-(CH_2)_4-CH_3)-]$, $[-O-(C_{13}H_{27}-(OCH_2CH_2)_5-O)Si(-(CH_2)_5-CH_3)-]$, $[-O-(C_{13}H_{27}-(OCH_2CH_2)_5-O)Si(-(CH_2)_6-CH_3)-]$, $[-O-(C_{13}H_{27}-(OCH_2CH_2)_5-O)Si(-(CH_2)_7-CH_3)-]$, $[-O-(C_{13}H_{27}-(OCH_2CH_2)_5-O)Si(-(CH_2)_2-CH(CH_3)_2)-]$, $[-O-(C_{13}H_{27}-(OCH_2CH_2)_5-O)Si(-(CH_2)_{15}-CH_3)-]$, $[-O-(HO-CH_2-CH(CH_3)-CH_2-O)Si(-(CH_2)_2-CH_3)-]$, $[-O-(HO-CH_2-CH(CH_3)-CH_2-O)Si(-(CH_2)_3-CH_3)-]$, $[-O-(HO-CH_2-CH(CH_3)-CH_2-O)Si(-(CH_2)_4-CH_3)-]$, $[-O-(HO-CH_2-CH(CH_3)-CH_2-O)Si(-(CH_2)_5-CH_3)-]$, $[-O-(HO-CH_2-CH(CH_3)-CH_2-O)Si(-(CH_2)_6-CH_3)-]$, $[-O-(HO-CH_2-CH(CH_3)-CH_2-O)Si(-(CH_2)_7-CH_3)-]$, $[-O-(HO-CH_2-CH(CH_3)-CH_2-O)Si(-(CH_2)_2-CH(CH_3)_2)-]$, $O-(HO-CH_2-CH(CH_3)-CH_2-O)Si(-(CH_2)i_5-CH_3)-]$, $[-O-(HO-CH_2-CH_2-O)Si(-(CH_2)_2-CH_3)-]$, $[-O-(HO-CH_2-CH_2-O)Si(-(CH_2)_3-CH_3)-]$, $[-O-(HO-CH_2-CH_2-O)Si(-(CH_2)_4-CH_3)-]$, $[-O-(HO-CHz-CH_2-O)Si(-(CH_2)_5-CH_3)-]$, $[-O-(HO-CH_2-CH_2-O)Si(-(CH_2)_6-CH_3)-]$, $[-O-(HO-CH_2-CH_2-O)Si(-(CH_2)_7-CH_3)-]$, $[-O-(HO-CH_2-CH_2-O)Si(-(CH_2)_2-CH(CH_3)_2)-]$,

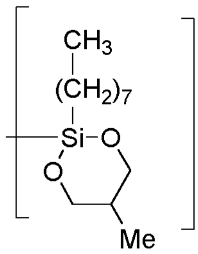
,
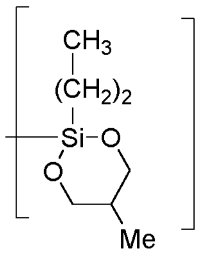
or
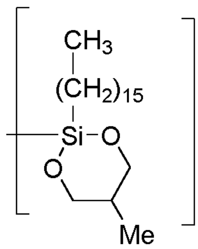
.

7. Oligomeric organosilanes according to Claim 1, **characterized in that** structural unit C is $[-O-CH_2-CH(CH)_3-CH_2-]$ or $[-O-CH_2-CH_2-]$.

8. Oligomeric organosilanes according to Claim 1, **characterized in that** structural unit A is $[-O-(EtO)Si(-(CH_2)_3-SH)-]$ or $[-O-(C_{13}H_{27}-(OCH_2CH_2)_5-O)Si(-(CH_2)_3-SH)-]$ or $[-O-(HO-CH_2-CH(CH_3)-CH_2-O)Si(-(CH_2)_3-SH)-]$ or

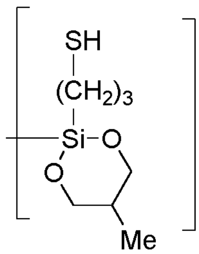

and structural unit B is $[-O-(EtO)Si(-(CH_2)_7-CH_3)-]$ or $[-O-(C_{13}H_{27}-(OCH_2CH_2)_5-O)Si(-(CH_2)_7-CH_3)-]$ or $[-O-(HO-CH_2-CH(CH_3)-CH_2-O)Si(-(CH_2)_7-CH_3)-]$ or

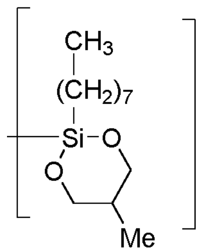

and structural unit C is $[-O-CH_2-CH(CH)_3-CH_2-]$.

9. Process for preparing the oligomeric organosilanes according to Claim 1, **characterized in that** a mercaptosilane D, an alkylsilane E, a polyol F,

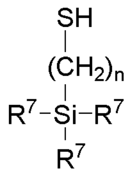 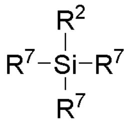 HO—(C($R^4$)$_2$)$_p$-OH

**D** **E** **F**

an alkyl polyether alcohol of the formula HO-($R^5$-O)$_m$-$R^6$ where $R^2$, $R^4$, $R^5$, $R^6$ n, m, p have the same definition as defined above,

$R^7$ is the same or different and is -OH, (C1-C4)-alkoxy, preferably ethoxy, or an alkyl polyether group -O-($R^5$-O)$_m$-$R^6$ where $R^5$ is the same or different and is a branched or unbranched, saturated or unsaturated, aliphatic divalent C1-C30 hydrocarbon group, preferably $CH_2CH_2$, m has an average value of 1 to 30, preferably 5, and $R^6$ is an unsubstituted or substituted, branched or unbranched C1-C30-alkyl, preferably $C_{13}H_{17}$, C2-C30-alkenyl, a C6-C14-aryl group, or a C7-C40-aralkyl group,

and a catalyst are mixed and reacted at a temperature of 20-180°C, preferably 90°C-150°C.

**10.** Process for preparing the oligomeric organosilanes according to Claim 9, **characterized in that** components D and F are used in a molar ratio of 1:1 to 1:10, preferably 1:2 to 1:10, more preferably 1:2 to 1:4, most preferably 1:2.1 to 1:3.

**11.** Process for preparing the oligomeric organosilanes according to Claim 9, **characterized in that** the catalyst is tetrabutyl orthotitanate.

**12.** Process for preparing the oligomeric organosilanes according to Claim 9, **characterized in that** the catalyst is not deactivated after the reaction and remains in the product.

**13.** Use of the oligomeric organosilanes according to Claim 1 in rubber mixtures.

**14.** Rubber mixtures, **characterized in that** these contain oligomeric organosilanes according to Claim 1.

**15.** Use of the rubber mixtures according to Claim 14 for production of shaped bodies, especially pneumatic tyres or tyre treads.

## Patentansprüche

**1.** Oligomere Organosilane, enthaltend mindestens die Struktureinheiten A, B und C in beliebiger linearer, verzweigter oder zyklischer Anordnung,

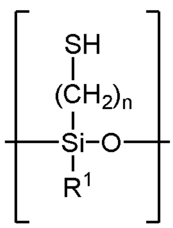 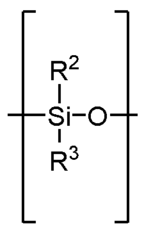 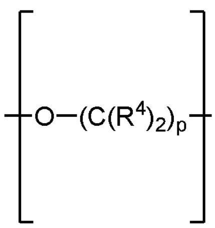

**A** **B** **C**

wobei n = 1-10, vorzugsweise 1-4, besonders bevorzugt 3, ist,

$R^1$ und $R^3$ unabhängig voneinander gleich oder verschieden sind und -OH, (C1-C4)Alkoxy, vorzugsweise Ethoxy, OSi$R^2R^3_2$, OSi((CH$_2$)$_n$SH)$R^3_2$ sind,

wobei Struktureinheit C unter Ausbildung einer O-Si-O-Bindung über das Sauerstoffatom an das Siliciumatom der Struktureinheit A oder B angebunden ist und mit einer - OH-Gruppe terminiert ist oder

zyklisch an den Sauerstoff der Si-O Gruppe der gleichen Struktureinheit angebunden ist, und eine Alkylpolyethergruppe -O-($R^5$-O)$_m$-$R^6$, wobei $R^5$ gleich oder verschieden ist und eine verzweigte oder unverzweigte, gesättigte oder ungesättigte, aliphatische zweibindige C1-C30-Kohlenwasserstoffgruppe, vorzugsweise $CH_2CH_2$,

ist, m im Mittel 1 bis 30, vorzugsweise 5, beträgt und $R^6$ eine unsubstituierte oder substituierte, verzweigte oder unverzweigte C1-C30-Alkyl-, vorzugsweise C13H17-, C2-C30-Alkenyl-, eine C6-C14-Arylgruppe oder eine C7-C40-Aralkylgruppe ist,

$R^2$ eine verzweigte oder unverzweigte, gesättigte oder ungesättigte, aliphatische einbindige C1-C30-, vorzugsweise C1-C8-, besonders bevorzugt C8-, Kohlenwasserstoffgruppe ist,

$R^4$ gleich oder unterschiedlich voneinander verzweigtes oder unverzweigtes, gesättigtes oder ungesättigtes C1-C10-Alkyl, C1-C10-Alkyl-OH, C1-C10-Alkyl-$NH_2$ oder H ist, und p = 1-10 ist,

**dadurch gekennzeichnet, dass** das molare Verhältnis der Alkylpolyethergruppe $-O-(R^5-O)_m-R^6$ zu Silicium größer 0 ist.

2. Oligomere Organosilane gemäß Anspruch 1, **dadurch gekennzeichnet, dass** das molare Verhältnis der Alkylpolyethergruppe $-O-(R^5-O)_m-R^6$ zu Silicium im Bereich von > 0 und < 0,30, vorzugsweise im Bereich von > 0 und ≤ 0,10, besonders bevorzugt im Bereich von 0,01 bis 0,09, ganz besonders bevorzugt im Bereich von 0,01 bis 0,08, liegt.

3. Oligomere Organosilane gemäß Anspruch 1, **dadurch gekennzeichnet, dass** das molare Verhältnis der Struktureinheit C zu Silicium im Bereich von > 0 und <1,7, vorzugsweise im Bereich von ≥ 0,1 und ≤ 1,5, liegt.

4. Oligomere Organosilane gemäß Anspruch 1, **dadurch gekennzeichnet, dass** das molare Verhältnis der Struktureinheiten A und B 10:1 bis 1:10, vorzugsweise 3:1 bis 1:3, besonders bevorzugt 2:1 bis 1:2, beträgt.

5. Oligomere Organosilane gemäß Anspruch 1, **dadurch gekennzeichnet, dass** die Strukureinheit A $[-O-(EtO)Si(-(CH_2)_3-SH)-]$, $[-O-(MeO)Si(-(CH_2)_3-SH)-]$, $[-O-(EtO)Si(-(CH_2)_4-SH)-]$, $[-O-(EtO)Si(-(CH_2)_5-SH)-]$, $[-O-(EtO)Si(-(CH_2)_6-SH)-]$, $[-O-(C_{13}H_{27}-(OCH_2CH_2)_5-O)Si(-(CH_2)_3-SH)-]$, $[-O-(HO-CH_2-CH(CH_3)-CH_2-O)Si(-(CH_2)_3-SH)-]$,

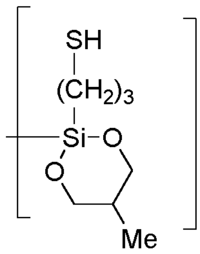
,

$[-O-(HO-CH_2-CH_2-O)Si(-(CH_2)_3-SH)-]$, $[-O-((EtO)_2Si((CH_2)_3-SH)-O)Si(-(CH_2)_3-SH)-]$, $[-O-((C_{13}H_{27}-(OCH_2CH_2)_5-O)(EtO)Si(-(CH_2)_3-SH)-O)Si((CH_2)_3-SH)-]$, $[-O-(HO-CH_2-CH(CH_3)-CH_2-O)(EtO)Si(-(CH_2)_3-SH)-O)Si((CH_2)_3-SH)-]$, $[-O-((EtO)_2Si((CH_2)_7-CH_3)-O)Si(-(CH_2)_3-SH)-]$, $[-O-((C_{13}H_{27}-(OCH_2CH_2)_5-O)(EtO)Si(-(CH_2)_7-CH_3)-O)Si((CH_2)_3-SH)-]$ oder $[-O-(HO-CH_2-CH(CH_3)-CH_2-O)(EtO)Si(-(CH_2)_7-CH_3)-O)Si((CH_2)_3-SH)-]$ ist.

6. Oligomere Organosilane gemäß Anspruch 1, **dadurch gekennzeichnet, dass** die Strukureinheit B $[-O-(MeO)Si(-(CH_2)_7-CH_3)-]$, $[-O-(EtO)Si(-(CH_2)_2-CH_3)-]$, $[-O-(EtO)Si(-(CH_2)_3-CH_3)-]$, $[-O-(EtO)Si(-(CH_2)_4-CH_3)-]$, $[-O-(EtO)Si(-(CH_2)_5-CH_3)-]$, $[-O-(EtO)Si(-(CH_2)_6-CH_3)-]$, $[-O-(EtO)Si(-(CH_2)_7-CH_3)-]$, $[-O-(EtO)Si(-(CH_2)_2-CH(CH_3)_2)-]$, $[-O-(EtO)Si(-(CH_2)_{15}-CH_3)-]$, $[-O-(C_{13}H_{27}-(OCH_2CH_2)_5-O)Si(-(CH_2)_2-CH_3)-]$, $[-O-(C_{13}H_{27}-(OCH_2CH_2)_5-O)Si(-(CH_2)_3-CH_3)-]$, $[-O-(C_{13}H_{27}-(OCH_2CH_2)_5-O)Si(-(CH_2)_4-CH_3)-]$, $[-O-(C_{13}H_{27}-(OCH_2CH_2)_5-O)Si(-(CH_2)_5-CH_3)-]$, $[-O-(C_{13}H_{27}-(OCH_2CH_2)_5-O)Si(-(CH_2)_6-CH_3)-]$, $[-O-(C_{13}H_{27}-(OCH_2CH_2)_5-O)Si(-(CH_2)_7-CH_3)-]$, $[-O-(C_{13}H_{27}-(OCH_2CH_2)_5-O)Si(-(CH_2)_2-CH(CH_3)_2)-]$, $[-O-(C_{13}H_{27}-(OCH_2CH_2)_5-O)Si(-(CH_2)_{15}-CH_3)-]$, $[-O-(HO-CH_2-CH(CH_3)-CH_2-O)Si(-(CH_2)_2-CH_3)-]$, $[-O-(HO-CH_2-CH(CH_3)-CH_2-O)Si(-(CH_2)_3-CH_3)-]$, $[-O-(HO-CH_2-CH(CH_3)-CH_2-O)Si(-(CH_2)_4-CH_3)-]$, $[-O-(HO-CH_2-CH(CH_3)-CH_2-O)Si(-(CH_2)_5-CH_3)-]$, $[-O-(HO-CH_2-CH(CH_3)-CH_2-O)Si(-(CH_2)_6-CH_3)-]$, $[-O-(HO-CH_2-CH(CH_3)-CH_2-O)Si(-(CH_2)_7-CH_3)-]$, $[-O-(HO-CH_2-CH(CH_3)-CH_2-O)Si(-(CH_2)_2-CH(CH_3)_2)-]$, $[-O-(HO-CH_2-CH(CH_3)-CH_2-O)Si(-(CH_2)_{15}-CH_3)-]$, $[-O-(HO-CH_2-CH_2-O)Si(-(CH_2)_2-CH_3)-]$, $[-O-(HO-CH_2-CH_2-O)Si(-(CH_2)_3-CH_3)-]$, $[-O-(HO-CH_2-CH_2-O)Si(-(CH_2)_4-CH_3)-]$, $[-O-(HO-CH_2-CH_2-O)Si(-(CH_2)_5-CH_3)-]$, $[-O-(HO-CH_2-CH_2-O)Si(-(CH_2)_6-CH_3)-]$, $[-O-(HO-CH_2-CH_2-O)Si(-(CH_2)_7-CH_3)-]$, $[-O-(HO-CH_2-CH_2-O)Si(-(CH_2)_2-CH(CH_3)_2)-]$,

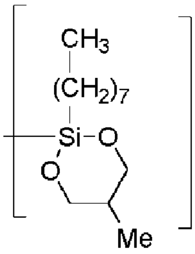, 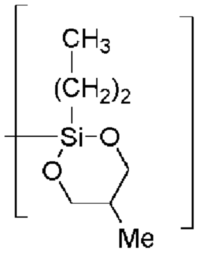 oder 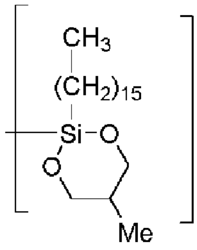.

ist.

7. Oligomere Organosilane gemäß Anspruch 1, **dadurch gekennzeichnet, dass** die Struktureinheit C [-O-$CH_2$-CH$(CH)_3$-$CH_2$-] oder [-O-$CH_2$-$CH_2$-] ist.

8. Oligomere Organosilane gemäß Anspruch 1, **dadurch gekennzeichnet, dass** die Struktureinheit A [-0-(EtO)Si(-$(CH_2)_3$-SH)-] oder [-O-($C_{13}H_{27}$-$(OCH_2CH_2)_5$-O)Si(-$(CH_2)_3$-SH)-] oder [-O-(HO-$CH_2$-CH($CH_3$)-$CH_2$-O)Si(-$(CH_2)_3$-SH)-] oder

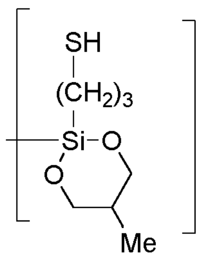

ist und die Struktureinheit B [-O-(EtO)Si(-$(CH_2)_7$-$CH_3$)-] oder [-O-($C_{13}H_{27}$-$(OCH_2CH_2)_5$-O)Si(-$(CH_2)_7$-$CH_3$)-] oder [-O-(HO-$CH_2$-CH($CH_3$)-$CH_2$-O)Si(-$(CH_2)_7$-$CH_3$)-] oder

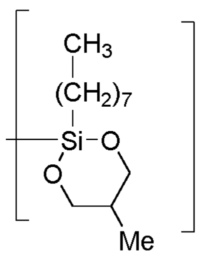

ist und die Struktureinheit C [-O-$CH_2$-CH$(CH)_3$-$CH_2$-] ist.

9. Verfahren zur Herstellung der oligomeren Organosilane gemäß Anspruch 1, **dadurch gekennzeichnet, dass** man ein Mercaptosilan D, ein Alkylsilan E, ein Polyol F,

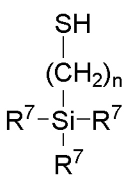 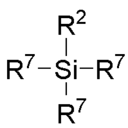 $HO-(C(R^4)_2)_p-OH$

D E F

ein Alkylpolyetheralkohol der Formel HO-$(R^5$-$O)_m$-$R^6$, wobei $R^2$, $R^4$, $R^5$, $R^6$ n, m, p die gleiche Bedeutung haben wie oben definiert,

$R^7$ gleich oder verschieden sind und -OH, (C1-C4)-Alkoxy, vorzugsweise Ethoxy, oder eine Alkylpolyethergruppe $-O-(R^5-O)_m-R^6$ ist, wobei $R^5$ gleich oder verschieden ist und eine verzweigte oder unverzweigte, gesättigte oder ungesättigte, aliphatische zweibindige C1-C30-Kohlenwasserstoffgruppe, vorzugsweise $CH_2CH_2$, ist, m im Mittel 1 bis 30, vorzugsweise 5, beträgt und $R^6$ eine unsubstituierte oder substituierte, verzweigte oder unverzweigte C1-C30-Alkyl-, vorzugsweise $C_{13}H_{17}$-, C2-C30-Alkenyl-, eine C6-C14-Arylgruppe oder eine C7-C40-Aralkylgruppe ist,
und einen Katalysator mischt und bei einer Temperatur von 20-180 °C, vorzugsweise 90 °C-150 °C, umsetzt.

**10.** Verfahren zur Herstellung der oligomeren Organosilane gemäß Anspruch 9, **dadurch gekennzeichnet, dass** die Komponenten D und F im molaren Verhältnis 1:1 bis 1:10, vorzugsweise 1:2 bis 1:10, besonders bevorzugt 1:2 bis 1:4, ganz besonders bevorzugt 1:2,1 bis 1:3, eingesetzt werden.

**11.** Verfahren zur Herstellung der oligomeren Organosilane gemäß Anspruch 9, **dadurch gekennzeichnet, dass** der Katalysator Tetrabutylorthotitanat ist.

**12.** Verfahren zur Herstellung der oligomeren Organosilane gemäß Anspruch 9, **dadurch gekennzeichnet, dass** der Katalysator nach der Umsetzung nicht deaktiviert ist und im Produkt verbleibt.

**13.** Verwendung der oligomeren Organosilane gemäß Anspruch 1 in Kautschukmischungen.

**14.** Kautschukmischungen, **dadurch gekennzeichnet, dass** diese oligomere Organosilane gemäß Anspruch 1 enthalten.

**15.** Verwendung der Kautschukmischungen gemäß Anspruch 14 zur Herstellung von Formkörpern, insbesondere Luftreifen oder Reifenlaufflächen.

## Revendications

**1.** Organosilanes oligomères contenant au moins des motifs structuraux A, B et C dans un agencement linéaire, ramifié ou cyclique quelconque

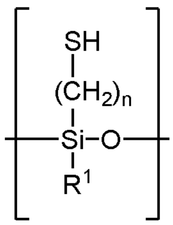
A

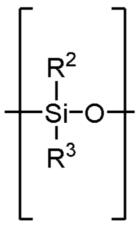
B

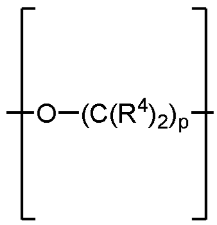
C

où n = 1 à 10, de préférence 1 à 4, plus préférablement 3,
$R^1$ et $R^3$ sont identiques ou différents et sont indépendamment -OH, alcoxy en C1-C4, de préférence éthoxy, $OSiR^2R^3_2$, $OSi((CH_2)_nSH)R^3_2$,
dans lesquels le motif structural C est lié via l'atome d'oxygène à l'atome de silicium du motif structural A ou B pour former une liaison O-Si-O, et est terminé par un groupe -OH ou
est lié cycliquement à l'oxygène du groupe Si-O du même motif structural, et un groupe alkyl-polyéther $-O-(R^5-O)_m-R^6$ où $R^5$ est identique ou différent et est un groupe hydrocarboné en C1-C30 divalent, aliphatique, ramifié ou non ramifié, saturé ou insaturé, de préférence $CH_2CH_2$, m a une valeur moyenne de 1 à 30, de préférence 5, et $R^6$ est un groupe alkyle en C1-C30, ramifié ou non ramifié, substitué ou non substitué, de préférence C13H17, un groupe alcényle en C2-C30 un groupe aryle en C6-C14 ou un groupe aralkyle en C7-C40,
$R^2$ est un groupe hydrocarboné monovalent, aliphatique, ramifié ou non ramifié, saturé ou insaturé, en C1-C30, de préférence en C1-C8, plus préférablement en C8,
$R^4$ est, identique ou différent, alkyle en C1-C10 ramifié ou non ramifié, saturé ou insaturé, (alkyle en C1-C10)-OH, (alkyle en C1-C10)-$NH_2$ ou H,
et p = 1 à 10,
**caractérisés en ce que** le rapport molaire du groupe alkyl-polyéther $-O-(R^5-O)_m-R^6$ au silicium est supérieur à 0.

2. Organosilanes oligomères selon la revendication 1, **caractérisés en ce que** le rapport molaire du groupe alkylpolyéther $-O-(R^5-O)_m-R^6$ au silicium est dans la plage de > 0 et < 0,30, de préférence dans la plage de > 0 et ≤ 0,10, plus préférablement dans la plage de 0,01 à 0,09, de manière préférée entre toutes dans la plage de 0,01 à 0,08.

3. Organosilanes oligomères selon la revendication 1, **caractérisés en ce que** le rapport molaire du motif structural C au silicium est compris dans la plage de > 0 et < 1,7, de préférence dans la plage de ≥ 0,1 et ≤ 1,5.

4. Organosilanes oligomères selon la revendication 1, **caractérisés en ce que** le rapport molaire des motifs structuraux A et B est de 10:1 à 1:10, de préférence de 3:1 à 1:3, plus préférablement de 2:1 à 1:2.

5. Organosilanes oligomères selon la revendication 1, **caractérisés en ce que** le motif structural A est $[-O-(EtO)Si(-(CH_2)_3-SH)-]$, $[-O-(MeO)Si(-(CH_2)_3-SH)-]$, $[-O-(EtO)Si(-(CH_2)_4-SH)-]$, $[-O-(EtO)Si(-(CH_2)_5-SH)-]$, $[-O-(EtO)Si(-(CH_2)_6-SH)-]$, $[-O-(C_{13}H_{27}-(OCH_2CH_2)_5-O)Si(-(CH_2)_3-SH)-]$, $[-O-(HO-CH_2-CH(CH_3)-CH_2-O)Si(-(CH_2)_3-SH)-]$,

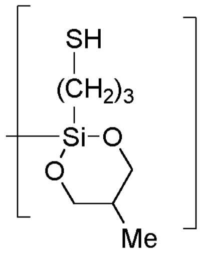
,

$[-O-(HO-CH_2-CH_2-O)Si(-(CH_2)_3-SH)-]$, $[-O-((EtO)_2Si((CH_2)_3-SH)-O)Si(-(CH_2)_3-SH)-]$, $[-O-((C_{13}H_{27}-(OCH_2CH_2)_5-O)(EtO)Si(-(CH_2)_3-SH)-O)Si((CH_2)_3-SH)-]$, $[-O-(HO-CH_2-CH(CH_3)-CH_2-O)(EtO)Si(-(CH_2)_3-SH)-O)Si((CH_2)_3-SH)-]$, $[-O-((EtO)_2Si((CH_2)_7-CH_3)-O)Si(-(CH_2)_3-SH)-]$, $[-O-((C_{13}H_{27}-(OCH_2CH_2)_5-O)(EtO)Si(-(CH_2)_7-CH_3)-O)Si((CH_2)_3-SH)-]$ ou $[-O-(HO-CH_2-CH(CH_3)-CH_2-O)(EtO)Si(-(CH_2)_7-CH_3)-O)Si((CH_2)_3-SH)-]$.

6. Organosilanes oligomères selon la revendication 1, **caractérisés en ce que** le motif structural B est $[-O-(MeO)Si(-(CH_2)_7-CH_3)-]$, $[-O-(EtO)Si(-(CH_2)_2-CH_3)-]$, $[-O-(EtO)Si(-(CH_2)_3-CH_3)-]$, $[-O-(EtO)Si(-(CH_2)_4-CH_3)-]$, $[-O-(EtO)Si(-(CH_2)_5-CH_3)-]$, $[-O-(EtO)Si(-(CH_2)_6-CH_3)-]$, $[-O-(EtO)Si(-(CH_2)_7-CH_3)-]$, $[-O-(EtO)Si(-(CH_2)_2-CH(CH_3)_2)-]$, $[-O-(EtO)Si(-(CH_2)_{15}-CH_3)-]$, $[-O-(C_{13}H_{27}-(OCH_2CH_2)_5-O)Si\ (-(CH_2)_2-CH_3)-]$, $[-O-(C_{13}H_{27}-(OCH_2CH_2)_5-O)Si(-(CH_2)_3-CH_3)-]$, $[-O-(C_{13}H_{27}-(OCH_2CH_2)_5-O)Si(-(CH_2)_4-CH_3)-]$, $[-O-(C_{13}H_{27}-(OCH_2CH_2)_5-O)Si(-(CH_2)_5-CH_3)-]$, $[-O-(C_{13}H_{27}-(OCH_2CH_2)_5-O)Si(-(CH_2)_6-CH_3)-]$, $[-O-(C_{13}H_{27}-(OCH_2CH_2)_5-O)Si(-(CH_2)_7-CH_3)-]$, $[-O-(C_{13}H_{27}-(OCH_2CH_2)_5-O)Si(-(CH_2)_2-CH(CH_3)_2)-]$, $[-O-(C_{13}H_{27}-(OCH_2CH_2)_5-O)Si(-(CH_2)_{15}-CH_3)-]$, $[-O-(HO-CH_2-CH(CH_3)-CH_2-O)Si(-(CH_2)_2-CH_3)-]$, $[-O-(HO-CH_2-CH(CH_3)-CH_2-O)Si(-(CH_2)_3-CH_3)-]$, $[-O-(HO-CH_2-CH(CH_3)-CH_2-O)Si(-(CH_2)_4-CH_3)-]$, $[-O-(HO-CH_2-CH(CH_3)-CH_2-O)Si(-(CH_2)_5-CH_3)-]$, $[-O-(HO-CH_2-CH(CH_3)-CH_2-O)Si(-(CH_2)_6-CH_3)-]$, $[-O-(HO-CH_2-CH(CH_3)-CH_2-O)Si(-(CH_2)_7-CH_3)-]$, $[-O-(HO-CH_2-CH(CH_3)-CH_2-O)Si(-(CH_2)_2-CH(CH_3)_2)-]$, $[-O-(HO-CH_2-CH(CH_3)-CH_2-O)Si(-(CH_2)_{15}-CH_3)-]$, $[-O-(HO-CH_2-CH_2-O)Si(-(CH_2)_2-CH_3)-]$, $[-O-(HO-CH_2-CH_2-O)Si(-(CH_2)_3-CH_3)-]$, $[-O-(HO-CH_2-CH_2-O)Si\ (-(CH_2)_4-CH_3)-]$, $[-O-(HO-CH_2-CH_2-O)Si(-(CH_2)_5-CH_3)-]$, $[-O-(HO-CH_2-CH_2-O)Si(-(CH_2)_6-CH_3)-]$, $[-O-(HO-CH_2-CH_2-O)Si\ (-(CH_2)_7-CH_3)-]$, $[-O-(HO-CH_2-CH_2-O)Si(-(CH_2)_2-CH(CH_3)_2)-]$,

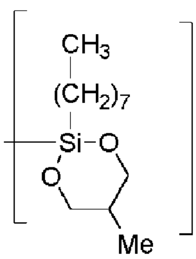
,
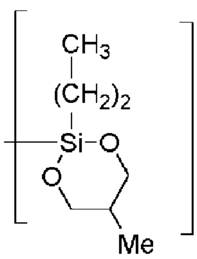
ou
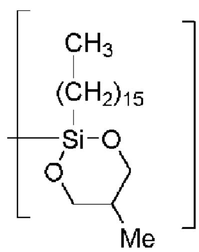
.

7. Organosilanes oligomères selon la revendication 1, **caractérisés en ce que** le motif structural C est [-O-

$CH_2$-$CH(CH)_3$-$CH_2$-] ou [-O-$CH_2$-$CH_2$-].

8. Organosilanes oligomères selon la revendication 1, **caractérisés en ce que** le motif structural A est [-O-(EtO)Si(-$(CH_2)_3$-SH)-] ou [-O-($C_{13}H_{27}$-$(OCH_2CH_2)_5$-O)Si (-$(CH_2)_3$-SH)-] ou [-O-(HO-$CH_2$-$CH(CH_3)$-$CH_2$-O)Si(-$(CH_2)_3$-SH)-] ou

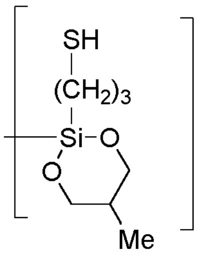

et le motif structural B est [-O-(EtO)Si(-$(CH_2)_7$-$CH_3$)-] ou [-O-($C_{13}H_{27}$-$(OCH_2CH_2)_5$-O)Si(-$(CH_2)_7$-$CH_3$)-] ou [-O-(HO-$CH_2$-$CH(CH_3)$-$CH_2$-O)Si(-$(CH_2)_7$-$CH_3$)-] ou

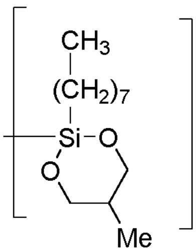

et le motif structural C est [-O-$CH_2$-$CH(CH)_3$-$CH_2$-].

9. Procédé de préparation des organosilanes oligomères selon la revendication 1, **caractérisé en ce qu'**un mercaptosilane D, un alkylsilane E, un polyol F,

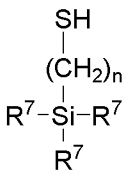

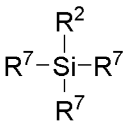

HO—$(C(R^4)_2)_p$-OH

**D** **E** **F**

un alcool d'alkyl-polyéther de formule HO-$(R^5$-$O)_m$-$R^6$ où $R^2$, $R^4$, $R^5$, $R^6$ n, m, p ont la même définition que celle définie ci-dessus,
$R^7$ est identique ou différent et est -OH, alcoxy en C1-C4, de préférence éthoxy, ou un groupe alkyl-polyéther - O-$(R^5$-$O)_m$-$R^6$ où $R^5$ est identique ou différent et est un groupe hydrocarboné en C1-C30 divalent, aliphatique, ramifié ou non ramifié, saturé ou insaturé, de préférence $CH_2CH_2$, m a une valeur moyenne de 1 à 30, de préférence 5, et $R^6$ est un groupe alkyle en C1-C30, ramifié ou non ramifié, substitué ou non substitué, de préférence $C_{13}H_{17}$, un groupe alcényle en C2-C30 un groupe aryle en C6-C14 ou un groupe aralkyle en C7-C40, et un catalyseur sont mélangés et réagissent à une température de 20 à 180 °C, de préférence de 90°C à 150 °C.

10. Procédé de préparation des organosilanes oligomères selon la revendication 9, **caractérisé en ce que** les composants D et F sont utilisés dans un rapport molaire de 1:1 à 1:10, de préférence de 1:2 à 1:10, plus préférablement de 1:2 à 1:4, de manière préférée entre toutes de 1:2,1 à 1:3.

11. Procédé de préparation des organosilanes oligomères selon la revendication 9, **caractérisé en ce que** le catalyseur est l'orthotitanate de tétrabutyle.

**12.** Procédé de préparation des organosilanes oligomères selon la revendication 9, **caractérisé en ce que** le catalyseur n'est pas désactivé après la réaction et reste dans le produit.

**13.** Utilisation des organosilanes oligomères selon la revendication 1 dans des mélanges de caoutchouc.

**14.** Mélanges de caoutchouc, **caractérisés en ce que** ceux-ci contiennent des organosilanes oligomères selon la revendication 1.

**15.** Utilisation des mélanges de caoutchouc selon la revendication 14 pour la fabrication de corps façonnés, notamment de pneus ou de bandes de roulement de pneus.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 2141159
- DE 2212239
- US 3978103 A
- US 4048206 A
- EP 0784072 A1
- EP 0964021 A
- WO 2006037380 A
- EP 0997489 A
- EP 1273613 A
- US 7368584 B
- EP 3094686 A
- US 2016289251 A1
- US 7369584 B


### Non-patent literature cited in the description


- **R. CORRIU ; D. LECLERCQ.** *Angew. Chem.,* 1996, vol. 108, 1524-1540
- Handbook of Rubber Technology. Dr. Gupta Verlag, 2001, 2-4
- **W. HOFMANN ; H. GUPTA.** Handbuch der Kautschuktechnologie. Dr. Gupta Verlag, 2001, 1-27, 82-107